# EUROPÄISCHE PATENTANMELDUNG

(11) **EP 1 382 506 A1**
(43) Veröffentlichungstag der Anmeldung: **21.01.2004**
(21) Anmeldenummer: 03405447.8
(22) Anmeldetag: 20.06.2003
(51) Int. Cl.: B61K 13/04, B61D 19/02

(54) **Sicherheitseinrichtung für die Überwachung des Bereichs der Wagentüren und Teils des Bahnsteigs**

(30) Priorität: 18.07.2002 CH 12542002
(71) Anmelder: Safecom Engineering Ag, CH-6022 Grosswangen (CH)
(72) Erfinder: Ineichen, Alois, CH-6017 Ruswil (CH)
(74) Vertreter: Frei, Alexandra Sarah

(57) **Zusammenfassung**

Um die steigenden Verkehrskapazitäten bewältigen zu können muss unter anderem das Ein- und Aussteigen von Personen aus den Zügen effizienter durchgeführt werden können. Gleichzeitig sind aber hohe Anforderungen an die Sicherheit gegen Unfälle beim Ein- und Aussteigen und auch an den Betrieb der Einrichtung gestellt. Das erfindungsgemässe Sicherheitssystem weist über jeder Wagontüre eine 'intelligente' Sensoreinheit auf, die einen klar abgegrenzten, definierten Raum im Bereich der Türen aber auch den relevanten Bereich auf dem Bahnsteig überwacht. Die Sensoreinheiten sind über Funk miteinander vernetzt. Die Überwachung des Bahnsteigs erfolgt mit kontaktlosen Sensoren, die in das Netzwerk eingebunden sind. Die Ausgabe eines Sicherheitssignals an den Lokomotivführer soll bspw. auf einem Display eindeutig und klar ersichtlich sein, sobald der überwachte Raum frei ist um die Türen schliessen zu können.

## Beschreibung

Die Erfindung liegt auf dem Gebiet der Sicherheitstechnik und betrifft eine Einrichtung, die vorzugsweise im Gebiet des Eisenbahnwesens zum Einsatz kommt.

Es ist bekannt, dass verschiedene Eisenbahngesellschaften dringend intelligentere Verkehrssysteme suchen, um den Transport von Personen und Gütern einfacher, sicherer und effizienter zu gestalten. Um die steigenden Verkehrskapazitäten bewältigen zu können muss unter anderem das Ein- und Aussteigen von Personen aus den Zügen effizienter durchgeführt werden können. Gleichzeitig sind aber hohe Anforderungen an die Sicherheit gegen Unfälle beim Ein- und Aussteigen und auch an den Betrieb der Einrichtung selber gestellt. Eine Möglichkeit bestände darin, die Bahnsteige/Perrons mit Türen so zu sichern, wie dies beispielsweise bei Aufzügen in Gebäuden gemacht wird. Diese an sich ausgereifte Art der Lösung ist jedoch teuer, einerseits als Investition und andererseits auch im Betrieb.

Die Erfindung stellt sich daher die Aufgabe, ein System bzw. Einrichtung zu schaffen, welches sicher stellt, dass beim Schliessen von Türen und bei der Abfahrt von Zügen keine Lebewesen gefährdet werden können und die in Anschaffung wie auch im Betrieb günstig ist.

Mit einem speziellen Sensor wird der Bereich einer Wagentüre und ein Teils des Bahnsteigs in einem auf zu und aussteigende Fahrgäste bezogenen, definierten Bereich überwacht und das Resultat der Überwachung in Form einer geeigneten Information dem Lokomotivführer übermittelt. Natürlich kann solch eine Einrichtung auch im Güterverkehr für das Ein- und Ausladen verwendet werden, ebenso bei Trams, Bussen und anderen Verkehrsmitteln. Ein solches System soll aus Gründen der Sicherheit folgende Eigenschaften haben: es soll eine gute Allwettertauglichkeit aufweisen, es soll störsicher sein, es soll zuverlässig sein, einfache Bedienbarkeit ist erwünscht, der Lokführer, Tramführer, Busführer etc. soll klar aussagekräftige Informationen erhalten um Irrtümer auszuschliessen, die Protokollierung aller relevanten Ereignisse soll sichergestellt sein, der Energiekonsum soll bei autonomen Einheiten niedrig sein, bspw. soll mit einem Batteriepaket bspw. in der Türbaugruppe angeordnet, eine Autonomie von 12 Monaten erreicht werden können.

Gelöst wird die Aufgabe, indem über jeder Wagontüre ein intelligenter Hybrid-Sensor angebracht wird, der einen klar abgegrenzten, definierten Raum im Bereich der Türen aber auch den relevanten Bereich auf dem Bahnsteig überwacht. Die Sensoreinheiten sind über Funk miteinander vernetzt. Die Überwachung des Bahnsteigs erfolgt mit kontaktlosen Sensoren, die in das Netzwerk eingebunden sind. Die Ausgabe eines Sicherheitssignals an den Lokomotivführer soll bspw. auf einem Display eindeutig und klar ersichtlich sein, sobald der überwachte Raum frei ist um die Türen schliessen zu können oder um abfahren zu können.

Dabei war grösste technische Herausforderung dieser Erfindung die Entwicklung eines sich selbst testenden diversitär-redundanten Hybrid-Sensors einerseits und die schnelle und sichere Übermittlung der Daten andererseits.

Sämtliche Komponenten, die für das sichere Funktionieren des Hybrid-Sensors verantwortlich sind, werden redundant aufgebaut, zudem muss sich das System, insbesondere die Sensoren und die Auswerte-Einheit, zyklisch selbst testen können, das heisst, das System muss von Zeit zu Zeit beweisen, dass es richtig funktioniert.

Anhand der folgenden Figuren wird die Erfindung nun im Detail diskutiert.
- Figur 1: zeigt einen schematischen Überblick über einen Teil des Systems bzw. über die Einrichtung mit Überwachungseinheiten mit Sensoren und eine Empfangseinheit mit Display zur Signalausgabe.
- Figur 2: zeigt im Schnitt durch Wagen und Bahnsteig schematisch die überwachte Zone einer Überwachungseinheit.
- Figur 3: zeigt in Form einer Blockschaltung die Elektronik zur Betätigung der Sensoren und für den Funkkontakt im Netzwerk einer Überwachungseinheit.
- Figur 4: zeigt in Form einer Blockschaltung die Elektronik zur Betätigung der Sensoren und für den Funkkontakt im Netzwerk einer Empfangseinheit.

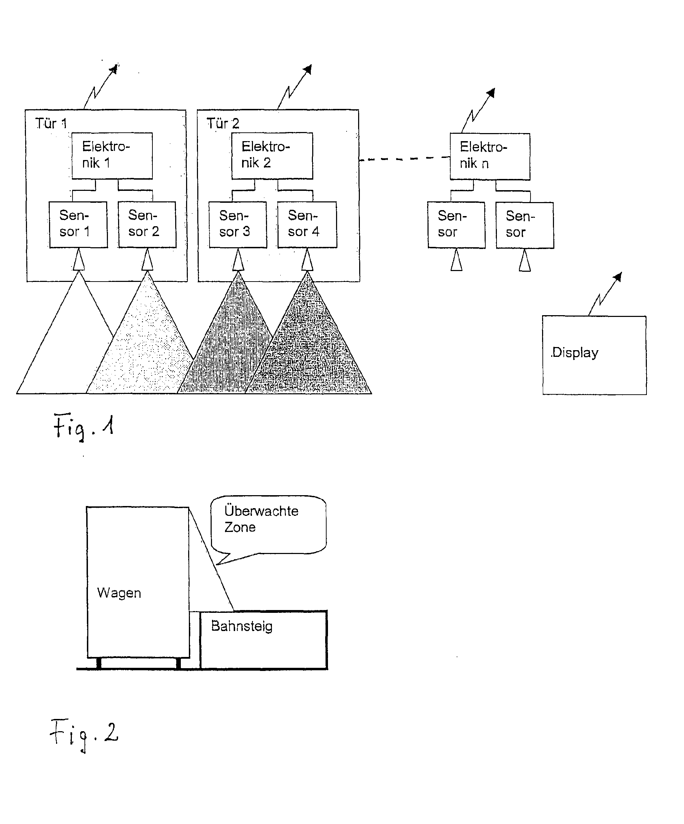

In Figur 1 erkennt man im schematischen Überblick einen Teil des Gesamtsystems, nämlich die Türen 1 und 2 bspw. eines Wagens und die Überwachungseinheit n einer weiteren Türe eines Wagens einer Zugskomposition. Der Sensor 1 überwacht mittels Ultraschall den Bahnsteig auf das Vorhandensein von Personen. Er ist so aufgebaut, dass er sich selbst testen kann. Sensor 2 macht dasselbe wie Sensor 1, aber auf der Basis von Infrarot-Strahlung. Die Elektronik verarbeitet die Signale der beiden 2

Sensoren und meldet das Resultat an das Display des Lokführers. Die Verbindung zwischen den einzelnen Türbaugruppen zum Display erfolgt über Funk.

Mit den 2 verschiedenen Sensoren (Hybrid-Sensor) und der notwendigen zweikanaligen Elektronik-Einheit , der Funkverbindung und dem Display ist das System diversitär redundant aufgebaut zur Erreichung einer sehr hohen Sicherheit und Verfügbarkeit.

Die Störsicherheit ergibt sich durch die Verwendung diversitär redundanter Sensoren, deren zweikanaliger, diversitär redundanter Auswertung mittels zwei verschiedenen Mikroprozessoren, die zudem in verschiedenen Programmiersprachen von zwei verschiedenen Programmierern programmiert werden und die zuverlässige Vernetzung zur Vermeidung von Steckkontakten durch Funkübertragung. Die einfache Bedienbarkeit ergibt sich insbesondere dann, wenn die risikofreie Abfahrt bspw. durch eine temporäre von Rot- auf Grünfärbung des Dienstdisplays des Lokführers erfolgt, sodass gar keine Bedienung nötig ist und auf diese Weise erhält der Lokführer auch die geforderte klar aussagekräftige Information. Die Protokollierung aller relevanten Ereignisse ist, ähnlich einem Flugdatenschreiber sichergestellt. Für die Energieversorgung kann anstelle eines Batteriepacks auch die vorhandene Bord-Niederspannung für die Beleuchtung benutzt werden.

Figur 2 zeigt schematisch die überwachte Zone zwischen einem Bahnwagen und dem Bahnsteig. Wie in Figur 1 zu erkennen ist, überlappen sich die Bereiche der diversitären Sensoren zu einem gemeinsamen Überwachungsbereich, der so eingestellt ist, dass auch die Annäherung von aussen auf die Türe zu überwacht wird, was mit einem Kegel schematisch dargestellt ist. So kann der Sensor frühzeitig auf eine, im letzten Moment auf die Türe zu rennende Person reagieren, was bei einer Anordnung ähnlich einem Überwachungsvorhang nicht der Fall wäre.

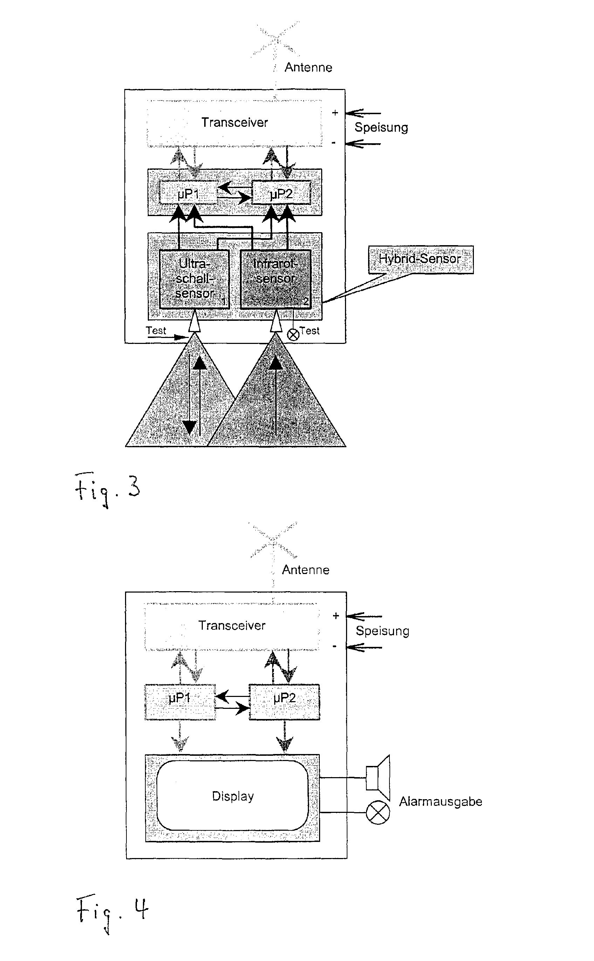

Figur 3 zeigt nun schematisch die ganze Überwachungseinheit mit Hybrid-Sensor, Signalverarbeitung Transceiver und Antenne, wie sie an jeder Türe angeordnet wird und im Verbund zusammenarbeiten mit den anderen Überwachungseinheiten. Eine solche Einheit besteht im wesentlichen aus einem Hybridsensor, umfassend einen Ultraschallsensor 1 und einen Infrarotsensor 2, die mit einem Mikroprozessor uP1 und einem zweiten Mikroprozessor uP2 diversitär (jeder mit jedem) für die Signalverarbeitung verbunden sind und untereinander kommunizieren und die erarbeiteten Informationen auf einen Transceiver abgeben, von welchem sie über die Antenne per Funk zur Empfangseinheit transmittiert werden. Diese diversitär-gemischt-zweikanalige Anordnung und Funktion bietet eine mehr als ausreichend hohe Sicherheit. Nebst diesen Funktionsteilen weist jede Überwachungseinheit Mittel für einen Test zur Selbstüberwachung auf, welcher folgendermassen funktioniert.

Der Selbsttest des Ultraschall-Sensors erfolgt dadurch, dass durch eine mechanische Einrichtung (hier als Pfeil dargestellt) die Abstrahlung des Ultraschalls verändert wird, womit sich ein anderes Ultraschall-Echo ergeben muss. Wenn die Änderung des Ultraschall-Echos festgestellt wird, ist der Test bestanden. Dieser Test wird zyklisch wiederholt. und erfolgt jeweils , wenn das Fahrzeug steht. Ebenso wird während der Fahrt ein dynamisches Ändern des Echo-Signals erwartet, da sich die Distanz zwischen Sensor und Boden ständig ändert. Der Selbsttest des Infrarot-Sensors erfolgt (über ein Mittel hier als Lampe dargestellt) dadurch , dass eine Wärme erzeugende Einrichtung aktiviert wird, die im Erfassungsbereich des Infrarot-Sensors montiert ist. Wird vom Infrarot-Sensor diese Erwärmung detektiert, so ist der Test bestanden. Dieser Test wird zyklisch wiederholt und erfolgt jeweils , wenn das Fahrzeug steht. Ebenso wird während der Fahrt ein dynamisches Ändern der Infrarot-Strahlung erwartet da sich die Temperatur des Bodens ständig ändert. Spricht der Sensor auf diese Erregung an, so ist er in Ordnung, wenn nicht, wird eine Störmeldung ausgegeben, dies natürlich ebenso beim Nichtansprechen des Ultraschallsensors.

Figur 4 zeigt eine Empfangseinheit, wie sie auf dem Führerstand angeordnet sein kann, mit Antenne, Transceiver, Signalverarbeitung, Monitor und Alarmausgabe. Die von der Überwachungseinheit transmittierte Information gelangt über die Antenne auf den Transceiver und von dort auf einen ähnlichen, diversitär-zwei-kanaligen uP-Verbund, wie er auch in der Überwachungseinheit verwendet wird, also eine ebenfalls diversitäre Signal- bzw. Informationsverarbeitung. Von den Mikroprozessoren wird dann die Information aller Überwachungseinheiten auf einen Display, Alarmausgabe, Signalausgabe etc. übergeben, wo sie dem Menschen über dessen Sinne vermittelt wird.

Die Übermittlung von einer Überwachungseinheit zur Empfangseinheit kann zeitlich verschachtelt erfolgen, sodass bspw. sich jede Einheit im Millisekundentakt bei der Empfangseinheit anmeldet. Dies muss nicht zyklisch und/oder synchron geschehen; bei den relativ kurzen und damit häufigen Anmeldevorgängen kommt auch bei einem asynchronen Ablauf jede, natürlich individualisierte Überwachungseinheit mehrmals innerhalb einer Sekunde zur Anmeldung. Dies bringt den Vorteil, dass die Überwachungseinheiten bspw. bei jeder neuen Komposition des Zuges aufeinander abgestimmt werden müssen. Dies ist eine Art quasi-chaos-Betrieb, first come, first served, wie es beim Ansturm auf ein leckeres Büffet stets auch der Fall ist.

Zusammengefasst arbeitet die Sicherheitseinrichtung folgendermassen: die Funkstrecke zwischen dem intelligenten Hybrid-Sensor und der Anzeige auf dem Lok-Führerstand wird permanent überwacht und in einem Störungsfall, wenn die Funkverbindung nicht mehr richtig funktioniert, eine Störungsmeldung an den Lokführer ausgibt, zum Beispiel eine gelbe blinkende Lampe, deren Funktion wiederum getestet wird, indem der Strom, der durch die Lampe fliesst gemessen wird, um so zu erkennen wenn die Warnlampe (den Sehsinn ansprechend) defekt sein sollte. In diesem Falle würde eine zweite Warneinrichtung, z.B. ein Summer (den Hörsinn ansprechend) ansprechen, der wiederum getestet wird wie die Glühlampe.

Sicherheitseinrichtung weist für die Verarbeitung des Hybrid-Sensors, wie gesagt, zwei diversitär-redundante Mikroprozessoren auf, die in zwei verschiedenen Programmiersprachen von zwei verschiedenen Programmierern programmiert werden.

Das Verfahren zur sicheren Überwachung von Durchgängen wird so betrieben, dass jeder Durchgang und seine unmittelbare Umgebung mittels einer sich selbst testenden Überwachungseinheit überwacht wird und die Informationen aus den Überwachungseinheiten zu einer Gesamtzustandsinformation zusammengefasst und als Handlungssignal ausgegeben wird. Dabei werden für die sichere Überwachung diversitär redundante Sensor- und Signalverarbeitungsmittel bis zur Ausgabe hin verwendet. Die Einheiten stehen im Funkkontakt miteinander in Verbindung, wobei sich die Überwachungseinheiten zyklisch aber nichtsynchron an der Empfangsstation anmelden. Das Verfahren beinhaltet auch die Selbstüberwachung der diversitären Sensoren.

## Patentansprüche

1. Sicherheitseinrichtung an Fahrzeugen zur Personen und/oder Güterbeförderung zur Überwachung der Tür- und daran anschliessende Steig- oder Wartebereiche, **gekennzeichnet durch** Überwachungseinheiten mit Sensoren in Türbereichen, welche den zur Zirkulation vorgesehenen Raum mit Tür und Steig derart überwachen und **durch** mindestens eine Empfangseinheit für die Signale aus den Überwachungseinheiten, womit zirkulierende Einheiten, Personen und/oder Güter erfasst und angezeigt werden.

2. Sicherheitseinrichtungen nach Anspruch 1, **dadurch gekennzeichnet, dass** in einem Fahrzeugzug alle Türen eine Überwachungseinheit aufweisen und damit die Türbereiche und die dazu relevanten Steigbereiche überwacht werden und dass alle Überwachungseinheiten zu einem Netzwerk geschaltet sind, welches die Signale in mindestens einer Empfangseinheit zusammenfasst und ein Freigabe- bzw. Abfahrtsignal abgibt.

3. Sicherheitseinrichtung nach einem der Ansprüche 1 oder 2, **dadurch gekennzeichnet, dass** jeder Türbereich ein diversitär-redundantes Sensorpaar aufweist. (Hybrid-Sensor)

4. Sicherheitseinrichtung nach einem der Ansprüche 1 bis 3, **dadurch gekennzeichnet, dass** die Verarbeitung des Hybrid-Sensors durch zwei diversitär-redundante Mikroprozessoren stattfindet, die in zwei verschiedenen Programmiersprachen von zwei verschiedenen Programmierern programmiert sind.

5. Sicherheitseinrichtung nach einem der vorangegangenen Ansprüche, **dadurch gekennzeichnet, dass** durch die Türschliessung ein Freigabesignal erzeugt wird und die Summe aller Freigabesignale dann ein Abfahrsignal erzeugen, wenn sie gleich der Summe der Türen ist.

6. System mit Sicherheitseinrichtungen nach einem oder mehreren der Ansprüche 1 bis 6, **dadurch gekennzeichnet, dass** in einem Fahrzeugzug alle Türen eine Überwachungseinheit aufweisen und damit die Türbereiche und die dazu relevanten Steigbereiche überwacht werden und dass alle Überwachungseinheiten zu einem Netzwerk geschaltet sind, welches die Signale in mindestens einer Empfangseinheit zusammenfasst und ein Freigabe- bzw. Abfahrtsignal abgibt.

7. Verfahren zur sicheren Überwachung von Durchgängen, **dadurch gekennzeichnet, dass** jeder Durchgang und seine unmittelbare Umgebung mittels einer sich selbst testenden Überwachungseinheit überwacht wird und die Informationen aus den Überwachungseinheiten zu einer Gesamtzustandsinformation zusammengefasst und als Handlungssignal ausgegeben wird.

8. Verfahren nach Anspruch 7, **dadurch gekennzeichnet, dass** die Einheiten im Funkkontakt miteinander in Verbindung gebracht werden, wobei sich die Überwachungseinheiten zyklisch aber nichtsynchron an der Empfangsstation anmelden.

9. Verfahren nach Anspruch 7 oder 8, **dadurch gekennzeichnet, dass** ein Selbsttest des Ultraschall-Sensors erfolgt dadurch, dass durch eine mechanische Einrichtung die Abstrahlung des Ultraschalls verändert wird, womit sich ein anderes Ultraschall-Echo ergeben muss.

10. Verfahren nach Anspruch 7 oder 8, **dadurch gekennzeichnet, dass** ein Selbsttest des Infrarot-Sensors vorgesehen ist dadurch , dass eine Wärme erzeugende Einrichtung aktiviert wird, die im Erfassungsbereich des Infrarot-Sensors montiert ist.

11. Verfahren für eine Sicherheitseinrichtung nach einem der vorangegangenen Ansprüche, **dadurch gekennzeichnet, dass** die Funkstrecke zwischen dem intelligenten Hybrid-Sensor und der Anzeige auf dem Lok- Führerstand permanent überwacht wird, und in einem Störungsfalle , wenn die Funkverbindung nicht mehr richtig funktioniert, eine Störungsmeldung an den Lokführer ausgibt, z.Bsp. eine gelbe blinkende Lampe, deren Funktion wiederum getestet wird, indem der Strom, der durch die Lampe fliesst gemessen wird, um so zu erkennen wenn die Warnlampe defekt sein sollte. In diesem Falle würde eine zweite Warneinrichtung, die wiederum getestet wird wie die Glühlampe.
